Europäisches Patentamt

European Patent Office

Office européen des brevets

(19)

(11) **EP 0 590 976 B1**

(12) **EUROPEAN PATENT SPECIFICATION**

(45) Date of publication and mention
of the grant of the patent:
**20.01.1999  Bulletin 1999/03**

(51) Int Cl.⁶: **H04N 5/76**

(21) Application number: **93307759.6**

(22) Date of filing: **30.09.1993**

(54) **Radio frequency switching circuit for a video cassette recorder (VCR)**

Radiofrequenz-Schalter für ein Videokassetten-Aufzeichnungsgerät (VCR)

Circuit commutateur de fréquence radio pour un enregistreur à cassettes vidéo (VCR)

(84) Designated Contracting States:
**DE GB**

(30) Priority: **30.09.1992  KR 9217956**

(43) Date of publication of application:
**06.04.1994  Bulletin 1994/14**

(73) Proprietor: **SAMSUNG ELECTRO-MECHANICS
Co. Ltd.
Suweon-si, Kyongki-do (KR)**

(72) Inventor: **Kwon, Kyoung Soo
Suweon-si, Kyongki-do (KR)**

(74) Representative: **Holmes, Miles Keeton et al
D. YOUNG & CO.,
21 New Fetter Lane
London EC4A 1DA (GB)**

(56) References cited:
**EP-A- 0 304 611          EP-A- 0 506 556
GB-A- 2 157 907          US-A- 4 630 133
US-A- 4 894 720**

- **IEEE 1992 INTERNATIONAL CONFERENCE ON
CONSUMER ELECTRONICS, DIGEST OF
TECHNICAL PAPERS 2 June 1992 , NEW YORK,
NY, US, pages 182 - 183 XP369228 MAIER ET AL.
'New high-density multistandard RF-concept for
VCR'**

## Description

The present invention relates to a radio frequency (RF) switching circuit for VCR, which switches RF-modulated A/V signals of a VCR and RF signals of an antenna. In particular, the present invention relates to a radio frequency switching circuit for VCR, in which, when selecting the video channel (the channel for receiving RF-modulated A/V signals in VCR) of a VCR, the introduction of the RF signals of broadcasting channels are completely blocked, so that the number of video channels for VCR can be increased.

Reference is made to EP-A-0304611 which discloses a circuit arrangement for distributing an antenna signal to input terminals of two appliances. One of these appliances is connected to a variable frequency modulator. An attenuating filter stage is connected between a pre-amplifier and the input of the appliance that is connected to the modulator. The pre-amplifier receives and amplifies the antenna signal. The attenuating filter stage is a frequency trap which has a trapping frequency that is identical to the modulator frequency and is synchronised with the tuning of the modulator frequency. The attenuating filter stage is said to be exactly tuned to the frequency of the modulator, and is said to have a tuned frequency that is always aligned parallel to the frequency of an oscillator in the modulator, so that modulation is not present.

Reference is also made to US-A-4894720 which describes a circuit for selectively outputting high frequency signals. When first high frequency signals from an antenna input terminal are selected to be outputted, all transistors constituting first and second switch devices are turned off and an RF modulator is also turned off. Therefore, first high frequency signals are transmitted to a TV output terminal through a first transmission line. When second high frequency signals outputted from the RF modulator are selected to be outputted, the RF modulator is turned on and transistors constituting the first and second switch devices are turned on. Consequently, second high frequency signals are transmitted to the TV output terminal through a second transmission line. On this occasion, the transistors constituting the first switch grounds the first transmission line and form a parallel resonance circuit in the first transmission line. Therefore, the passage of the first high frequency signals from the antenna input terminal is cut off and the reverse passage of the second high frequency signals and a harmonics component thereof from the second transmission line is prevented.

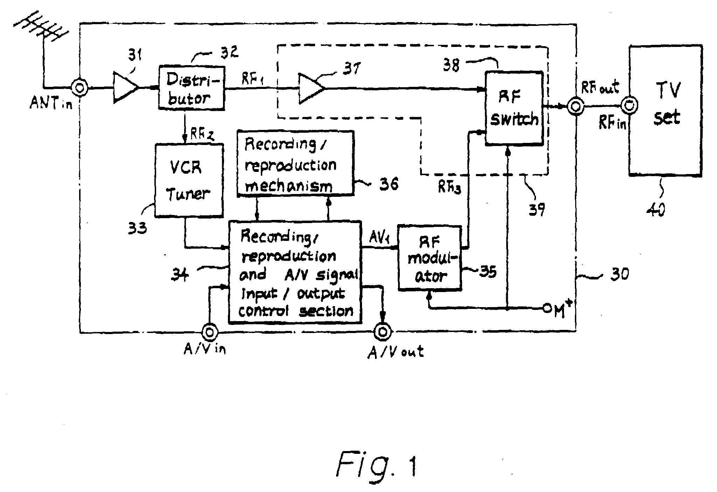

One example of a conventional circuit from a VCR is now shown in Figure 1.

Referring to Figure 1, broadcasting signals (air or CATV) which are inputted through an antenna input terminal ANTin of a VCR 30 are initially amplified by an RF amplifier 31. Then the signals are supplied through a distributor 32 to a VCR tuner 33 and to a buffer amplifier 37 of an amplifying and switching section 39 as first and second RF signals RF1 and RF2. The first RF signals RF1 which are amplified by the buffer amplifier 37 are supplied to an RF switch 38. Meanwhile, base band signals of the relevant selected channel, which are outputted from the VCR tuner 33, are supplied to a recording/reproducing and A/V signal inputting/outputting control section 34 which controls a recording/reproducing mechanism 36, and also controls the A/V input and output of an external audio/video input/output terminals A/Vin and A/Vout.

A/V signals AV1, i.e., the reproduction signals of the video tape, which are outputted from the recording/reproducing and A/V signal input/output control section 34, are supplied to an RF modulator 35 which is operated by a modulation voltage $M^+$. The modulation voltage $M^+$ is generated during the selection of the video reproduction mode, and drives the RF modulator 35. With the help of this modulation voltage $M^+$, the RF modulator modulates the incoming A/V signals AV1 into third RF signals RF3 which have a particular TV channel frequency.

The third RF signals which are outputted from the RF modulator 35 are supplied to the RF switch 38 which performs switchings in accordance with the modulation voltage $M^+$.

Accordingly, when the modulation voltage $M^+$ is generated, the third RF signals RF3 which are the reproduction signals of the video tape appear on an RF output terminal RFout of the VCR 30. On the other hand, if the modulation voltage $M^+$ is not generated, the first RF signals RF1 which are the antenna signals of air or CATV broadcasting appear on the RF output terminal RFout of the VCR 30.

Such RF output of the VCR 30 is supplied to an antenna terminal RFin of a TV set 40.

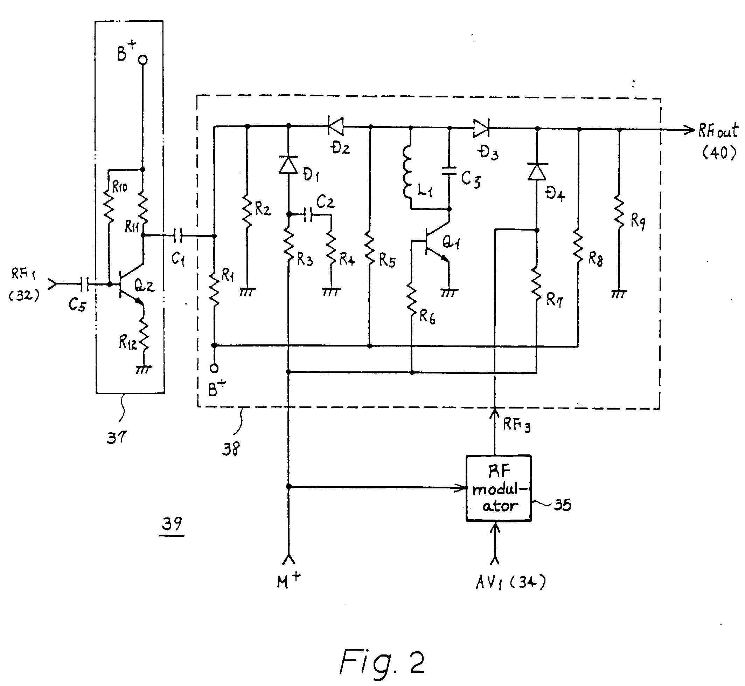

Figure 2 illustrates the circuit of the conventional RF switch 38 and the peripheral sections.

Referring to Figure 2, the first RF signals RF1 which are outputted from the distributor 32 are inputted through a coupling capacitor C5 to the buffer amplifier 37.

The buffer amplifier 37 includes: an amplifying transistor Q2 connected to an emitter resistor R12 and a collector output resistor R11; and a base resistor R10 for applying a bias voltage on the base of the amplifying transistor Q2. A circuit voltage $B^+$ is supplied to the collector resistor R11 and to the base bias resistor R10.

The first Rf signals RF1 which are amplified by the buffer amplifier 37 are supplied through a coupling capacitor C1 to the RF switch 38.

In the case where the modulation voltage $M^+$ is not generated, the first RF signals RF1 which are inputted into the RF switch 38 are passed through to the output terminal of the RF switch 38 by forward-biasing second and third pin diodes D2 and D3 to which the circuit voltage $B^+$ and ground potential are applied through resistors R5 and R2 and resistors R5 and R9, respectively, so that the second and third pin diodes D2 and D3 have a low resistance value. The signals pass through the anode-cathode of the third pin diode D3 which has a low resistance value of several $\Omega$, and ultimately appear on the output terminal of the RF switch 38. That is, in this case, the system is put to an air or CATV receiving mode.

However, if the modulation voltage M+ is generated by selecting the VCR reproduction mode, the modulation voltage M+ passes through the resistor R3 and a pin diode D1 then biased in the forward direction to be ultimately supplied to the cathode of the second pin diode D2. Therefore, the second pin diode D2 is subjected to a reverse bias, and therefore, it has a resistance value of several k$\Omega$. Accordingly, the first RF signals RF1 cannot pass through the second pin diode D2, while the first pin diode D1 comes to have a low resistance value of several $\Omega$ by being subjected to a forward bias by the function of the modulation voltage M+ and resistors R2 and R3. Therefore, the first RF signals RF1 are grounded through the cathode-anode of the first pin diode D1, a capacitor C2 and a resistor R4.

Further, the modulation voltage M+ is supplied through a resistor R6 to the base of a switching transistor Q1 to turn it on, and therefore, a current driven by the circuit voltage B+ passes through the resistor R5, an inductor L1, and the switching transistor Q1.

Accordingly, the first RF signals RF1 which leak through the second pin diode D2 are coupled through the capacitor C3 and the collector-emitter of the switching transistor Q1 to ground.

Meanwhile the modulation voltage M+ also passes through a resistor R7 and a fourth pin diode D4, then forward-biased, to the cathode of the third pin diode D3, then reverse-biased, while the modulation voltage puts the fourth pin diode D4 to a forward bias after passing through the resistor R7.

Consequently, the third RF signals RF3 which are generated by the RF modulator 35 by the function of the modulation voltage M+ pass through the low resistance path of the fourth pin diode D4 to the output terminal of the RF switch 38, i.e., the RF output terminal RFout of the VCR 30. Accordingly, in this case, the system is put to a video channel receiving mode.

However, in the conventional RF switching circuit operating as described above, complete damping of the RF air broadcasting signals by the pin diodes is not achieved when in the video channel receiving mode, and interference from nearby air broadcasting signals can be caused.

Therefore, in order to avoid the influence of a nearby broadcasting channel when designing the video channel selection by utilising the RF modulator of VCR, one or two vacant channels are provided between the air broadcasting channels. However, this imposes an undesirable restraint in the designing of the circuit.

Particularly in view of the drastic increase in the number of air broadcasting stations, it would be desirable to provide a perfect design of the video channel for a VCR; that is, there is desired an RF switch which is not affected by nearby channels.

According to the invention, there is provided a radio frequency switching circuit for a VCR, comprising:

an RF amplifier for amplifying antenna signals;
a distributor for distributing the antenna output signal from the RF amplifier to an amplifying and switching section and to a VCR tuner as first and second RF signals;
a recording/reproduction and A/V signal input/output control section for outputting tape reproduction signals and base band signals from the VCR tuner, and for controlling a recording/reproducing mechanism;
an RF modulator responsive to a modulation control voltage (M+) for modulating the A/V signal from the recording/reproduction and A/V signal input/output section, to generate third RF signals (RF3) when said modulation control voltage is applied; and
an amplifying and switching section for selecting the RF output mode of the VCR by switching between the first and third RF signals;

characterised in that the amplifying and switching section comprises:

a switching control section for generating an output current (Io) when the said modulation control voltage (M+) is supplied thereto; and
a switchable amplifier controlled by the output current (Io) from the switchable control section, and operable to selectively output the first RF signals or the third RF signals without mutual interference, the switchable amplifier comprising:
an amplifying transistor connected to a collector resistor, to an emitter resistor, and to base biasing voltage dividing resistors, the base of the amplifying transistor being arranged to receive the first RF signals, the emitter of the amplifying transistor being coupled to the output of said switching control section for on/off control by said output current (Io), a circuit voltage B+ being supplied to the collector resistor and across the base voltage dividing resistors, the third RF signals from the RF modulator being supplied through the collector output resistor the collector of the amplifying transistor, and the collector output of the amplifying transistor being coupled to an RF output terminal (RF$_{OUT}$) of the VCR.

In other words, embodiments of the circuit according to the present invention are such that first RF input signals which have passed through a distributor are amplified by the collector output terminal of a switchable amplifier including an amplifying transistor to be ultimately outputted through an RF output terminal; third RF input signals of the VCR are outputted through an output resistor of the amplifying transistor to the RF output terminal, when the amplifying transistor of the switchable amplifier is turned off by the switching control current derived from the modulation voltage.

Thus there is advantageously provided a radio frequency switching circuit for a VCR, in which the increase of the number of video channels is assured by eliminating the interference of the nearby channels, thereby preparing for the drastic increase in the number of air broadcasting stations.

Thus there is also advantageously provided a radio frequency switching circuit for a VCR, in which the constitution of the circuit is simplified to save manufacturing costs.

There now follows a description of a preferred embodiment of the present invention, by way of example, with reference being made to the accompanying drawings in which:

Figure 1 is a block diagram showing the constitution of a conventional VCR;
Figure 2 illustrates the circuit of the conventional amplifying and switching section of Figure 1; and
Figure 3 illustrates in detail the circuit of the amplifying and switching section according to the present invention.

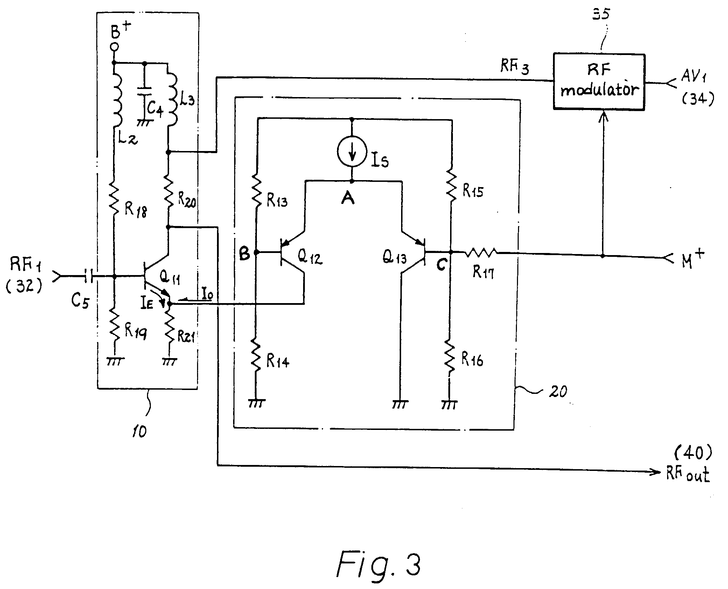

Figure 3 illustrates the circuit according to the invention, and in this drawing, the same elements as those of Figure 1 are assigned with the same reference codes.

First, air or CATV broadcasting RF signals, i.e., first RF signals RF1, which have passed through an RF amplifier 31 and a distributor 32 are supplied through a coupling capacitor C5 to a switchable amplifier 10.

The switchable amplifier 10 includes an amplifying transistor Q11 which is connected to an emitter resistor R21 and a collector resistor R20, and the amplifier 10 also includes voltage dividing resistors R18 and R19 which are connected to the base of the transistor Q11. A circuit voltage B+ is supplied through noise removing CR filtering circuits (consisting of an inductor L3 and a capacitor C4, and an inductor L2 and the capacitor C4) respectively to the collector output resistor R20 and to the voltage dividing resistors R18 and R19.

The emitter of the amplifying transistor Q11 of the switchable amplifier 10 receives an output current Io of a switching control section 20 which is controlled by a modulation voltage M+. The output of the collector of the amplifying transistor Q11 is supplied to an RF output terminal RFout of a VCR 30. An RF modulator 35 converts incoming A/V signals AV1 to third RF signals RF3 by being driven by the modulation voltage M+. The RF modulated output of the RF modulator 35 is supplied through the collector output resistor R20 of the switchable amplifier 10 to the RF output terminal RFout of the VCR 30.

The switchable control section 20 includes: a PNP type first switching transistor Q12 with its emitter connected to a current source Is, and with its base connected through voltage dividing resistors R13 and R14 to the current source Is; and a PNP type second switching transistor Q13 with its emitter connected to the current source Is, and with its base connected through voltage dividing resistors R15 and R16 to the current source Is. A collector output current Io of the first switching transistor Q12 is supplied to the emitter of the amplifying transistor Q11 of the switchable amplifier 10, while the collector output current of the second switching transistor Q13 is bypassed to the ground.

Further, the base of the second switching transistor Q13 receives also the modulation voltage M+ through a current limiting resistor R17.

The circuit of the present invention constituted as above will now be described as to its operation and effect.

Referring to Figure 3 again, if a voltage $V_A$ of a node A, which is formed by the current source Is of the switchable control section 20 is 0.7 volts higher than a voltage $V_B$ of a node B, then the first switching transistor Q12 is turned on. In the same way, if the voltage $V_A$ of the node A is 0.7 volts higher than a voltage $V_C$ of a node C, then the second switching transistor Q13 is turned on. (It is assumed that the turn-on voltage for the first and second switching transistors Q13 and Q12 is 0.7 volts)

Thus, in a state with the modulation voltage M+ not supplied to the switching control section 20, if the ratio of flow of the current Is through the resistors R13, R14, R15 and R16 are adjusted to satisfy the following relation,

$$V_A < 0.7 \text{ volts} + V_B$$

$$V_A \geq 0.7 \text{ volts} + V_C,$$

then the second switching transistor Q13 is turned on, while the first switching transistor Q12 is turned off.

Under this condition, the potential difference $V_{BE2}$ between the base and the emitter of the second switching transistor Q13 satisfies more than the turning-on condition (about 0.7V) for the same transistor.

Therefore, the amplifying transistor Q11 of the switchable amplifier 10 is biased by the circuit voltage B+ which has been divided by the voltage dividing resistors R18 and R19, so that the first RF signals RF1 which are supplied to its base are amplified. Then the first RF signals RF1 which appear on its collector are supplied to the RF output terminal RFout of the VCR 30 to be ultimately supplied to the RF input terminal RFin of the TV set 40.

Meanwhile, when the modulation voltage M+ is generated by selecting the video reproduction mode of the VCR, this modulation voltage M+ flows through the resistors R16 and R17 of the switching control section 20 to the ground.

The voltage which appears across the opposite ends of the resistor R16 is the voltage $V_C$ applied to the base of the second switching transistor Q13 which voltage $V_C$ depends on the modulation voltage M+.

Under this condition, when M+ is generated, the potential difference $V_{BE2}$ between the base and emitter of the second switching transistor Q13 rises to the turning-on voltage for the same transistor.

That is,

$$V_A < 0.7 \text{ volts} + V_C$$

$$V_A \geq 0.7 \text{ volts} + V_B$$

are satisfied, and therefore, this time, the second switching transistor Q13 of the switching control section 20 is turned off, while the first switching transistor Q12 is turned on.

Therefore, the output current Io is additionally supplied to the emitter of the amplifying transistor Q11 of the switchable amplifier 10 by the switching control section 20. Therefore, under this condition, the emitter voltage $V_E$ of the amplifying transistor Q11 becomes $V_E = R_{21}I_E + R_{21}Io$.

Thus, under a video reproduction mode for VCR, the bias voltage $V_{BE}$ which owes to the difference between the emitter voltage $V_E$ and the base voltage $V_B$ of the amplifying transistor Q11 drops to below the turning-on voltage, thereby turning off the amplifying transistor Q11. Under this condition, the resistance value between the input and output of the amplifying transistor Q11 reaches several mega $\Omega$, and therefore, the antenna input signals, i.e., the base side first RF signals RF1 do not appear at all on the collector of the amplifying transistor Q11.

Under this condition, the third RF signals of the RF modulator 35, which modulates the A/V input signals AV1 to the RF signals of particular channel, are outputted through the RF output terminal RFout of the VCR 30 after passing through the collector resistor R20 of the amplifying transistor Q11 of the switchable amplifier 10. Such VCR video reproduction RF output is supplied to the RF input terminal RFin of the TV set 40.

According to the present invention as described above, the RF switching circuit for the VCR is simplified, thereby making it possible to save manufacturing costs.

Further, during the selection of the video channel of the VCR, the introduction of the air or CATV broadcasting RF signals are completely blocked, and therefore, there is required no consideration for providing vacant channels between the effective channels. Thus the restraint in the design is eliminated, and the number of video channels can be increased.

**Claims**

1. A radio frequency switching circuit for a VCR, comprising:

an RF amplifier (31) for amplifying antenna signals;
a distributor (32) for distributing the antenna output signal from the RF amplifier to an amplifying and switching section (39) and to a VCR tuner (33) as first and second RF signals (RF1, RF2);
a recording/reproduction and A/V signal input/output control section (34) for outputting tape reproduction signals and base band signals from the VCR tuner, and for controlling a recording/reproducing mechanism;
an RF modulator (35) responsive to a modulation control voltage (M+) for modulating the A/V signal from the recording/reproduction and A/V signal input/output section (34), to generate third RF signals (RF3) when said modulation control voltage is applied; and
an amplifying and switching section (39) for selecting the RF output mode of the VCR by switching between the first and third RF signals (RF1, RF3);

characterised in that the amplifying and switching section (39) comprises:

a switching control section (20) for generating an output current (Io) when the said modulation control voltage (M+) is supplied thereto; and
a switchable amplifier (10) controlled by the output current (Io) from the switchable control section (20), and operable to selectively output the first RF signals (RF1) or the third RF signals (RF 3) without mutual interference, the switchable amplifier (10) comprising:
an amplifying transistor (Q11) connected to a collector resistor (R20), to an emitter resistor (R21), and to base biasing voltage dividing resistors (R18, R19), the base of the amplifying transistor (Q11) being arranged to receive the first RF signals (RF1), the emitter of the amplifying transistor (Q11) being coupled to the output of said switching control section (20) for on/off control by said output current (Io), a circuit voltage B+ being supplied to the collector resistor R20 and across the base voltage dividing resistors (R18, R19), the third RF signals (RF3) from the RF modulator (35) being supplied through the collector output resistor (R20) to the collector of the amplifying transistor (Q11), and the collector output of the amplifying transistor (Q11) being coupled to an RF output terminal (RF_OUT) of the VCR.

**2.** A radio frequency switching circuit according to claim 1, wherein the switching control section (20) comprises:

first and second switching transistors (Q12, Q13);

first and second voltage dividing resistors (R13, R14) coupled to the base of the first switching transistor (Q12);

third and fourth voltage dividing resistors (R15, R16) coupled to the base of the second switching transistor (Q13);

a current source (Is) having a first terminal connected to the emitters of the first and second switching transistors (Q12, Q13), and a second terminal connected to the first and third voltage dividing resistors (R13, R15);

wherein the collector current of the first switching transistor (Q12) provides said output current (Io), the collector of the second switching transistor (Q13) being connected to ground potential, and the modulation control voltage (M+) being supplied through a current limiting resistor (R17) to the base of the second switching transistor (Q13).

**3.** A radio frequency switching circuit according to claim 2, wherein the switching control section (20) is configured such that, if the modulation control voltage (M+) is not supplied, the potential difference ($V_{BE2}$) between the base and the emitter of the second switching transistor (Q13) exceeds the turn-on voltage for that transistor, thereby turning off the first switching transistor (Q12); and

if the modulation control voltage (M+) is supplied, the potential difference ($V_{BE2}$) between the base and emitter of the second switching transistor (Q13) is insufficient to turn-on the second switching transitor, and under this condition the potential difference between the base and the emitter of the first switching transistor (Q12) exceeds the turn-on voltage thereof.

**4.** A VCR incorporating a radio frequency switching circuit according to any preceding claim.

**Patentansprüche**

**1.** Schaltkreis zum Schalten von Radiofrequenzen für einen VCR (Videocassettenrecorder), mit:

einem RF-Verstärker (31) für das Verstärken von Antennensignalen,

einem Verteiler (32) für das Verteilen des Antennenausgangssignals aus dem RF-Verstärker an einen Verstärkungs- und Umschaltabschnitt (39) und an einen VCR-Tuner (33) als erste und zweite RF-Signale (RF1, RF2),

einem Aufzeichnungs-/Wiedergabe- und einen A/V-Signaleingangs-/Ausgangs-Steuerabschnitt (34), um Bandwiedergabesignale und Basisbandsignale aus dem VCR-Tuner auszugeben, und um einen Aufzeichnungs-/Wiedergabemechanismus zu steuern,

einem RF-Modulator (35), der auf eine Modulationssteuerspannung (M+) zum Modulieren des A/V-Signals aus dem Aufzeichnungs-/Wiedergabe- und A/V-Signaleingangs-/Ausgangsabschnitt (34) anspricht, um dritte RF-Signale (RF3) zu erzeugen, wenn die Modulationssteuerspannung angelegt ist, und

einem Verstärkungs- und Umschaltabschnitt (39), um den RF-Ausgangsbetrieb des VCR auszuwählen, indem zwischen den ersten und dritten RF-Signalen (RF1, RF3) umgeschaltet wird,

**dadurch gekennzeichnet**, daß der Verstärkungs- und Umschaltabschnitt (39) aufweist:

einen Umschaltsteuerabschnitt (20), um einen Ausgangsstrom (Io) zu erzeugen, wenn die Modulationssteuerspannung (M+) daran angelegt wird, und

einen schaltbaren Verstärker (10), der durch den Ausgangsstrom (Io) aus dem umschaltbaren Steuerabschnitt (20) gesteuert wird und der so betreibbar ist, daß er gezielt die ersten RF-Signale (RF1) oder die dritten RF-Signale (RF3) ohne wechselseitige Interferenz ausgibt, wobei der umschaltbare Verstärker (10) aufweist:

einen Verstärkungstransistor (Q11), der mit einem Kollektorwiderstand (R20), einem Emitterwiderstand (R21) und mit Teilerwiderständen (R18, R19) für eine Basisvorspannung verbunden ist, wobei die Basis des Verstärkungstransistors (Q11) so angeordnet ist, daß sie die ersten RF-Signale (RF1) empfängt, der Emitter des Verstärkungstransistors (Q11) mit dem Ausgang des Umschaltsteuerabschnittes (20) über die Ein-/Aus-Steuerung des Ausgangsstromes (Io) verbunden ist, eine Schaltkreisspannung B+ an den Kollektorwiderstand (R20) und über die Teilerwiderstände (R18, R19) für die Basisspannung angelegt ist, die dritten RF-Signale (RF3) aus dem RF-Modulator (35) über den Kollektorausgangswiderstand (R20) dem Kollektor des Verstärkungstransistors (Q11) zugeführt werden, und der Kollektorausgang des Verstärkungstransistors (Q11) mit einem RF-Ausgangsanschluß ($RF_{OUT}$) des VCR verbunden ist.

**2.** Schaltkreis zum Umschalten von Radiofrequenzen nach Anspruch 1, wobei der Umschaltsteuerabschnitt (20) aufweist:

erste und zweite Schalttransistoren (Q12, Q13),

erste und zweite Spannungsteilerwiderstände (R13, R14), die mit der Basis des ersten Schalttransistors (Q12) verbunden sind,

dritte und vierte Spannungsteilerwiderstände (R15, R16), die mit der Basis des zweiten Schalttransistors (Q13) verbunden sind,

eine Stromquelle (Is), deren erster Anschluß mit den Emittern der ersten und zweiten Schalttransistoren (Q12, Q13) verbunden ist und deren zweiter Anschluß mit den ersten und dritten Spannungsteilerwiderständen (R13, R15) verbunden ist,

wobei der Kollektorstrom des ersten Schalttransistors (Q12) den Ausgangsstrom (Io) liefert, der Kollektor des zweiten Schalttransistors (Q13) mit Masse verbunden ist und die Modulationssteuerspannung (M+) über einen Strombegrenzungswiderstand (R17) der Basis des zweiten Schalttransistors (Q13) zugeführt wird.

**3.** Schaltkreis für das Schalten von Radiofrequenzen nach Anspruch 2, wobei der Umschaltsteuerabschnitt (20) so ausgestaltet ist, daß dann, wenn die Modulationssteuerspannung (M+) nicht angelegt wird, der Potentialunterschied ($V_{BE2}$) zwischen der Basis und dem Emitter des zweiten Schalttransistors (Q13) die Einschaltspannung für diesen Transistor übersteigt und damit den ersten Schalttransistor (Q12) abschaltet, und

daß dann, wenn die Modulationssteuerspannung (M+) angelegt wird, der Potentialunterschied ($V_{BE2}$) zwischen der Basis und dem Emitter des zweiten Schalttransistors (Q13) nicht ausreicht, um den zweiten Schalttransistor einzuschalten, und daß unter diesem Zustand der Potentialunterschied zwischen der Basis und dem Emitter des ersten Schalttransistors (Q12) die Einschaltspannung desselben übersteigt.

**4.** VCR, welcher einen Schaltkreis für das Schalten von Radiofrequenzen nach einem der vorstehenden Ansprüche aufweist.

**Revendications**

**1.** Circuit de commutation à haute fréquence pour un magnétoscope, comprenant :

un amplificateur RF (31) pour amplifier des signaux d'antenne ;

un distributeur (32) pour distribuer le signal de sortie d'antenne venant de l'amplificateur RF à une section d'amplification et de commutation (39) et à un tuner de magnétoscope (33) sous la forme de premier et deuxième signaux RF (RF1, RF2) ;

une section de commande d'entrée/sortie de signal A/V et d'enregistrement/reproduction (34) pour délivrer en sortie des signaux de reproduction de bande et des signaux de bande de base à partir du tuner de magnétoscope, et pour commander un mécanisme d'enregistrement/reproduction ;

un modulateur RF (35) réagissant à une tension de commande de modulation (M+) en modulant le signal A/V venant de la section d'entrée/sortie de signal A/V et d'enregistrement/reproduction (34), afin de générer des troisièmes signaux RF (RF3) lorsque ladite tension de commande de modulation est appliquée ; et

une section d'amplification et de commutation (39) pour sélectionner le mode de sortie RF du magnétoscope en effectuant une commutation entre les premier et troisième signaux RF (RF1, RF3) ;

caractérisé en ce que la section d'amplification et de commutation (39) comprend :

une section de commande de commutation (20) pour générer un courant de sortie (Io) lorsque ladite tension de commande de modulation (M+) est délivrée à celle-ci ; et

un amplificateur commutable (10) commandé par le courant de sortie (Io) venant de la section de commande de commutation (20), et pouvant fonctionner de façon à délivrer sélectivement en sortie les premiers signaux RF (RF1) ou les troisièmes signaux RF (RF3) sans interférence mutuelle, l'amplificateur commutable (10) comprenant :

un transistor d'amplification (Q11) connecté à une résistance de collecteur (R20), à une résistance d'émetteur (R21), et à des résistances de division de tension de polarisation de base (R18, R19), la base du transistor d'amplification (Q11) étant configurée de façon à recevoir les premiers signaux RF (RF1), l'émetteur du transistor d'amplification (Q11) étant couplé à la sortie de ladite section de commande de commutation (20) pour la commande de marche/arrêt à l'aide dudit courant de sortie (Io), une tension de circuit (B+) étant délivrée à la résistance de collecteur (R20) et aux bornes des résistances de division de tension de base (R18, R19), les troisièmes signaux RF (RF3) venant du modulateur RF (35) étant délivrés par l'intermédiaire de la résistance de sortie de collecteur (R20) au collecteur du transistor d'amplification (Q11), et la sortie de collecteur du transistor d'amplification (Q11) étant couplée à une borne de sortie RF (RF$_{OUT}$) du magnétoscope.

2. Circuit de commutation à haute fréquence selon la revendication 1, dans lequel la section de commande de commutation (20) comprend :

des premier et deuxième transistors de commutation (Q12, Q13) ;
des première et deuxième résistances de division de tension (R13, R14) couplées à la base du premier transistor de commutation (Q12) ;
des troisième et quatrième résistances de division de tension (R15, R16) couplées à la base du deuxième transistor de commutation (Q13) ;
une source de courant (Is) comportant une première borne connectée aux émetteurs des premier et deuxième transistors de commutation (Q12, Q13), et une deuxième borne connectée aux première et troisième résistances de division de tension (R13, R15) ;
dans lequel le courant de collecteur du premier transistor de commutation (Q12) fournit ledit courant de sortie (Io), le collecteur du deuxième transistor de commutation (Q13) étant connecté au potentiel de masse, et la tension de commande de modulation (M+) étant délivrée par l'intermédiaire d'une résistance de limitation de courant (R17) à la base du deuxième transistor de commutation (Q13).

3. Circuit de commutation à haute fréquence selon la revendication 2, dans lequel la section de commande de commutation (20) est configurée de telle sorte que, si la tension de commande de modulation (M+) n'est pas délivrée, la différence de potentiel (V$_{BE2}$) entre la base et l'émetteur du deuxième transistor de commutation (Q13) dépasse la tension de déblocage pour ce transistor, de façon à bloquer par conséquent le premier transistor de commutation (Q12) ; et

si la tension de commande de modulation (M+) est délivrée, la différence de potentiel (V$_{BE2}$) entre la base et l'émetteur du deuxième transistor de commutation (Q13) est insuffisante pour rendre passant le deuxième transistor de commutation, et, dans cette condition, la différence de potentiel entre la base et l'émetteur du premier transistor de commutation (Q12) dépasse la tension de déblocage de celui-ci.

4. Magnétoscope incorporant un circuit de commutation à haute fréquence selon l'une quelconque des revendications précédentes.

Fig. 1

Fig. 2

Fig. 3